# EUROPEAN PATENT SPECIFICATION

(11) **EP 0 245 089 B1**
(45) Date of publication and mention of the grant of the patent: **07.09.1994**
(21) Application number: 87304037.2
(22) Date of filing: 06.05.1987
(51) Int. Cl.: G02B 21/24

(54) **Microscope**
Mikroskop
Microscope

(30) Priority: 06.05.1986 US 860023; 09.04.1987 JP 85636/87
(43) Date of publication of application: 11.11.1987
(73) Proprietor: SLIDEX CORPORATION, Tokyo (JP)
(72) Inventor: Ozeki, Jiro, Toshima-Ku Tokyo (JP)
(74) Representative: Fitzpatrick, Alan James

(56) References cited:
- WO-A-86/01004
- GB-A- 2 027 927
- US-A- 3 862 793
- US-A- 4 557 568

## Description

The present invention relates to a microscope which allows direct microscopic observation of samples on glass plates (preparations) arranged in a file page.

In general, an object to be inspected is observed through a microscope after a part of an organism is cut off and attached onto a glass plate. The glass plate is prepared by coloring the attached part. However, since this sample generally uses a thin glass plate of approximately 1 x 3 inches (2.54 x 7.62 cm) as a carrier, the preparation is likely to be broken and may sometimes cut fingers.

Further, every time an observation of a sample is to be made, glass plates are carried, one at a time,to a microscope by hand, and are fixed thereto for inspection. However, such a procedure is extremely inconvenient for medical and pharmacological studies when a number of samples are to be observed.

For this reason, in order that many preparations (10, 20, etc.) may be handled as a single group of samples, it has been recently necessary to arrange and put these preparations in a specific order for quick observation.

For instance, in order that a three-dimensional state of change in tissues may be observed, it is necessary to prepare samples which have been separately cut off into several layers between an epiderm portion and an inner layer. Tens of preparations are usually necessary, and are required to be arranged and put in a specific order depending upon cut-off locations of the living body.

Moreover, for instance, when preparations prepared from different objects placed under the same conditions through cutting, are compared and examined together, that is classified with respect to study themes in pharmacological studies, these preparations are desirably arranged and stored in a single file page together. This is required to enhance the comparison examination speed and ultimately increase study efficiency.

Based on the above requirements, recently there have been widely used a so-called "preparation file" in which preparations may be detachably arranged and stored, for example, in three columns and six rows, that is, in a total number of eighteen, on a single plastic transparent file page. Therefore, it is a current practice to take out preparations stored in the file page and place them under the microscope one by one, and return them to the file page after the observation. This is a time-consuming process, and its operation has not been simplified.

U.S.-A-4557568 relates to a microscope wherein there is provided a work station, the miroscope comprising a base frane, a stage mounted on said base frame, and optical means. The arrangement of U.S.-A-4557568 facilitates the positioning of flat delicate objects in front of the objective of a microscope. G.B.-A-2027927 shows a file page for use in this stage of a microscope and serving to hold flat, delicate objects (samples), while U.S.-A-3862793 shows the provision in a microscope of a device for rapid alignment of a selected area among grouped specimen areas on a plate with an optical microscope axis.

It is an object of the present invention to provide a microscope which allows direct observation of several different samples of an object to be inspected while the samples being placed in a file page so as to remove the above-mentioned inconveniences.

According to the present invention there if provided a microscope comprising a base frame, a stage mounted on said base frame and a file page placed on said stage and adapted for supporting a plurality of preparations in a common plant, said preparations being attached with samples, an arm extending from said base frame above said stage, magnifying optical means mounted on said arm and defining an optical axis directed perpendicular to said stage for viewing of said plurality of samples, a pair of levers each pivotably mounted on opposite sides of said arm, and a press piece located at one end of said pair of levers, said levers being urged relative to said stage to elastically press and release a sample onto and from said stage so that the sample is observed through said magnifying optical means.

Embodiments of the present invention will now be described by way of example with reference to the accompanying drawings wherein:-
Figure 1 is a perspective view showing a microscope on which the present invention is based.
Figures 2a, 2b, 2c and 2d are illustrative views showing a file page for holding slide preparations, which file page is used in connection with the microscope according to the present invention;
Figures 3a, 3b and 3c are illustrative views of a microscope according to one embodiment of the present invention;
Figures 4a, 4b, 4c and 4d are a plane view, a sectional view and detailed views showing another embodiment of the file page, respectively;
Figures 5a and 5b are plane view and a sectional view showing a still another embodiment of the file page, respectively.
Figure 6 shows a perspective view of an embodiment of the invention where a stage is movable vertically;
Figure 7 is a partially enlarged sectional view of still another embodiment of the microscope according to the present invention which is provided with a stage base plate having a means for locating and pushing a file page on the stage; and
Figures 8a and 8b are a plane view and a partially enlarged sectional view, respectively of a file page advantageously applied to the microscope of Figure 7.

The present invention will be explained in more detail with reference to the attached drawings.

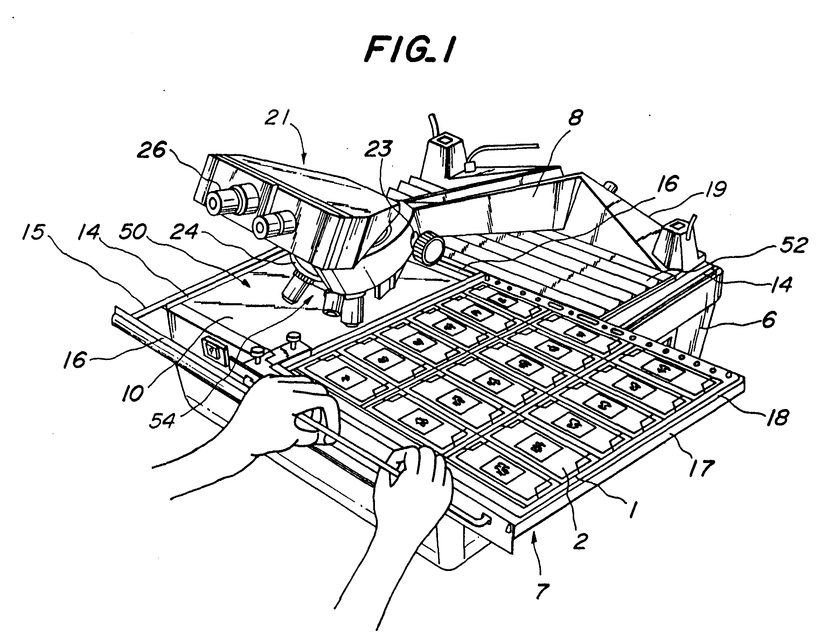

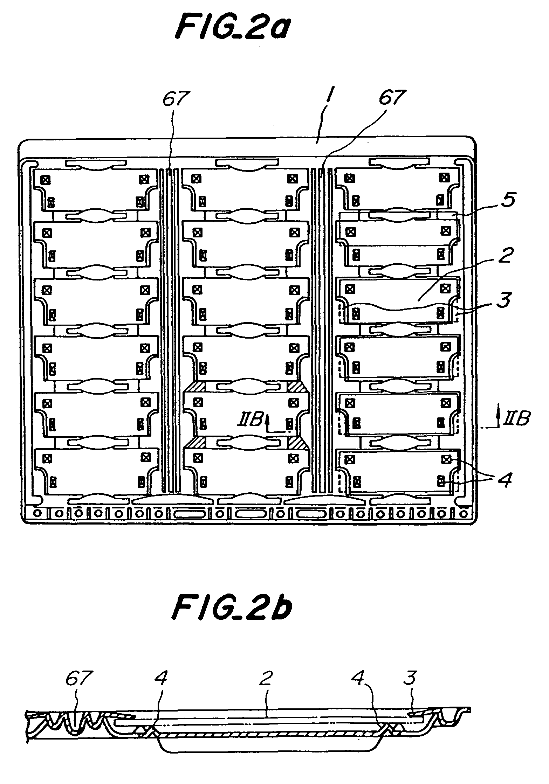

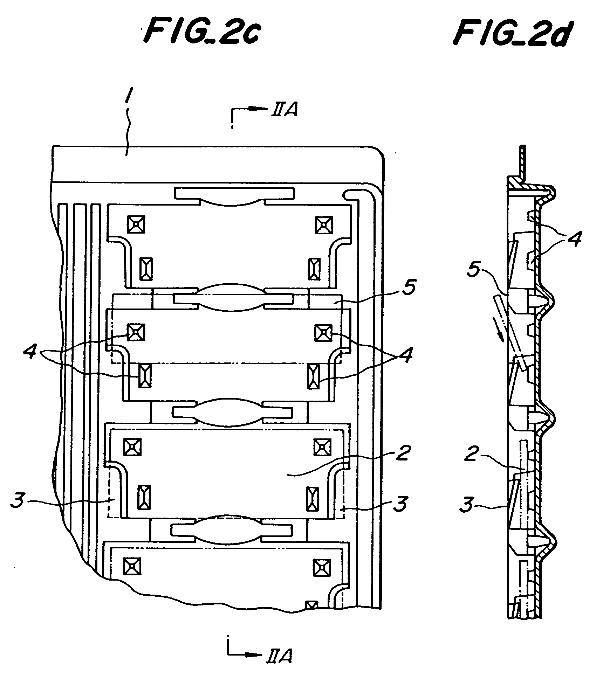

Referring in particular to Fig. 1 and Figs 2a to 2c a preparation file page 1 for holding preparations used in connection with the microscope according to the present invention and a preparation 2, which includes a glass slide, a sample to be viewed, and a glass cover sheet are shown.

The file page 1 with the preparations 2 is placed on a stage 18 which is located on a stage base plate 17. Stage base plate 17 is located on a slide device 7 provided on a box body 6 forming a base frame of the microscope. The microscope of these figures is provided with the box body 6 having a planar upper face 50. The slide device 7 is slidably mounted on the upper face of the box body 6. Therefore, as the slide device is moved in any desired direction, the box body remains stationary. The slide device may be locked at a desired direction for microscopic viewing of a particular slide.

A support arm 8 supports an optical system of the microscope such that the operation of the slide device 7 does not interrupt the optical system. The upper face of the box body 6 is covered with a light transmitting diffusion plate 10. The plate 10 may be transparent or translucent. An appropriate light source (not shown) and an optical system (not shown) for uniformly irradiating light rays from the light source to the diffusion plate 10 are arranged inside or outside of the box body 6. The diffusion plate is uniformly illuminated from underneath by means of the light source and the optical system. An accordian-type black sheet 52 is connected to the slide device so that when the slide device is moved towards the operator, the sheet moves with the slide device to block out light from the diffusion plate 10. Sheet 52 remains stationary during lateral movement of the slide device.

The preparation file page 1 is illuminated from underneath through a cross head 15 placed on the diffusion plate 10. Thereby, a group of the preparations 2 are observed through the file page 1. The area of the diffusion plate 10 which includes the optional axis of the microscope is used for microscopic viewing of a single slide preparation. However, the remainder of the diffusion plate acts as a preview area to illuminate all the slides in the file page prior to microscopic examination. A label on each slide, and the slide itself, is thereby sufficiently illuminated to aid an operator in deciding which slide to be examined by the microscope.

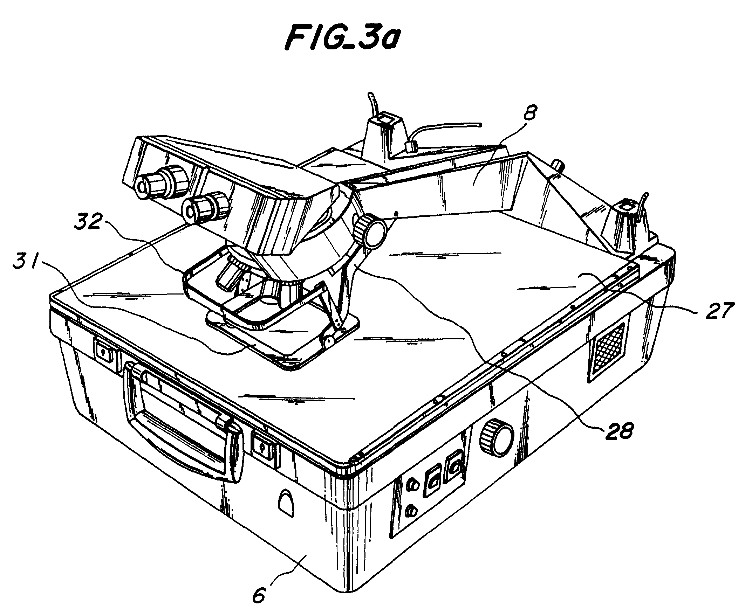

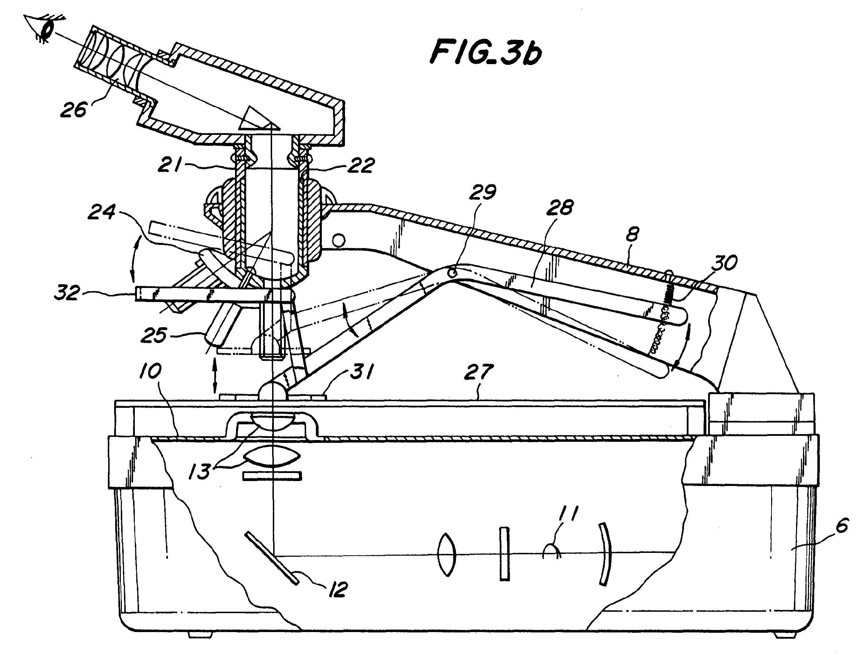

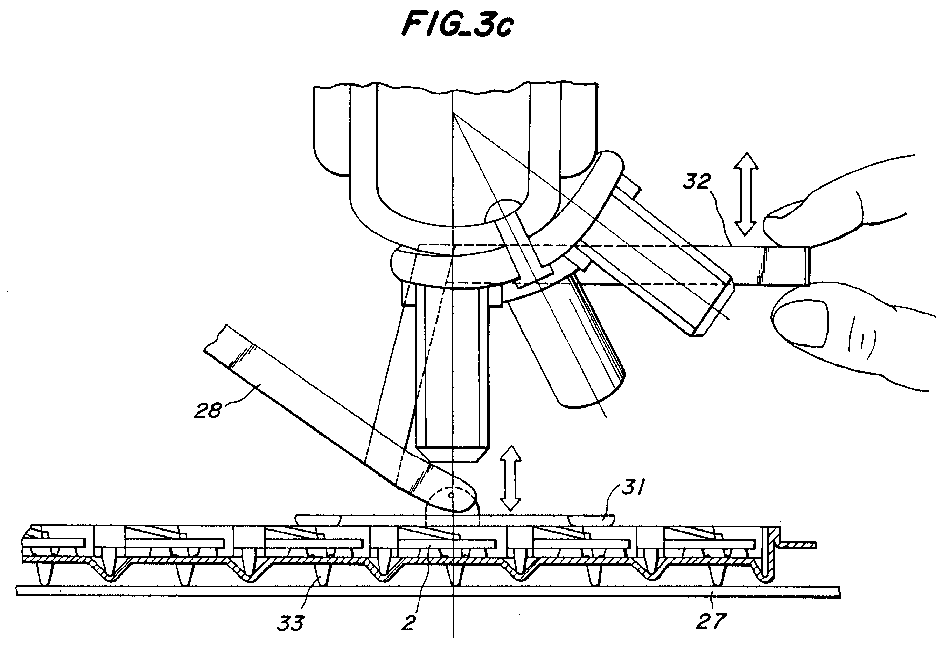

As shown in Figure 3b, according to the illustrated embodiment, the illuminating optical system includes an auxiliary condenser lens, a reflection mirror 12 and a condenser lens 13 arranged in the box body. As shown in Figure 3b, a beam of light rays passes through an object to be inspected via a light ray path passing through the light source 11, the reflection mirror 12 and the condenser lens 13.

The slide device 7 (Fig. 1) is constructed so that a pair of cross heads 15 are engaged through roller bearings with a pair of parallel lateral rails 14, provided on right and left edges on the upper face of the box body through roller bearings. A pair of transverse rails 16, orthogonal to the lateral rails 14 are attached to or integral with the cross heads 15. The stage base plate 17 is engaged with the transverse rails 16 through roller bearings 53 as are cross head 15 with the rails 14.

The stage 18 is located on the stage base plate 17. The stage 18 is designed to be equal or slightly larger in size than preparation file page 1, and is made of a metal framing or a glass plate, For instance, projections may be provided onto this metal framing or glass plate for engaging with holes of the file page. By such a construction, the file page 1 placed on the stage 18 is freely moved two-dimensionally (along X and Y axes) in a horizontal plane by means of two pairs of rails 14, 16 and the stage base plate 17.

As shown in Japanese patent publication 50-6,839, locating means are provided in two pairs of the rails, the cross head and the stage base plates.

Further, the stage 18 or the stage base plate 17 may be provided with metal pieces such as L-letter shaped engaging pieces which engage with at least two or four sides or corner portions of the file page 1 to locate the latter on the stage.

Further, as shown in Figure 1, an arm 8 is provided at upper face corners of the box body 6. The arm obliquely extends over the box body in an upward direction from the rigid base portion 19. The arm 8 is provided at the tip portion with an upper optical system 21 of the microscope. The optical system has a light optical axis which is coincident with the optical axis from the condenser leans 13 (Fig. 3b). A lower optical system 54 is screwed to the upper optical system 21 through a rack and pinion system 23 such that the lower optical system 54 may be moved roughly or finely on the same axis as the upper optical system. The lower opticl system 54 is provided with plural kinds of objective lenses 25 and an objective lens-supporting barrel 22. The objective lenses 25 include different magnifications, and are supported by a revolving nosepiece 24. A beam of the light rays incident to the objective lense changes its orientation by an optical path switch prism and is converged by an ocular lens 26. The beam is thereby led to a visual field of an observer.

The preparation file 1 is formed by molding a transparent plastic plate. Its outer profile has transverse sides of about 28 cm and lateral sides of about 28 cm. The preparation file serves as a storing instrument capable of orderly arranging the preparations 2 in a lattice pattern of three columns and six rows, that is, in a total amount of eighteen. As shown in Figure la, each of the preparations is detachably inserted into one section of the file 1. Once the preparation 2 is inserted in the preparation file 1, it is kept parallel to the bottom face of the file 1.

The preparation 2 is retained in the file page 1 in a horizontal position by a pair of planar lugs 3, 3 and projections 4, 4 shown in Figures, 2a, 2b, 2c and 2d. The lugs are made of plastic and integrally provided on the side edge portions of each section on the upper face of the file page 1. The lugs are inclined slightly downwardly to elastically press the preparation 2 in place.

Two or four projections 4 project upwardly from the bottom face in the vicinity of the planar lugs 3. A face which is inclined toward the inside of the section is provided in a wall 5 opposed to the planar lugs 3, 3 on the preparation-inserting side so as to facilitate the insertion of the preparation 2. This makes it extremely easy to insert the preparation 2 into the section of the file page and take out the preparation from the file page. After the insertion, the preparation is prevented from slipping out from the section. Even if the file page is shaken back and forth, the preparation will not slip out from the file page.

The projections 4 serve as a spacer to prevent the glass preparations 2 from being damaged due to an external impact upon the bottom face of the file page. Further, the projections form a space necessary for out-of-focusing fine dirt, etc. which is located on the bottom plate, from an image of an object to be inspected during the direct observation through the file page. Since the preparations 2 are regularly and horizontally arranged in the file page 1, the preparations are easily distinguished by holding the file page 1 to the light.

As shown in Figure 2a, a row of binding holes are provided on one edge portion of the file page to bind the file page in an ordinary binder or the like. The binding holes are used not only for binding the file page in a binder but also for engaging with pins 77 projecting from the stage base plate 17 through stages 18 when the file page is placed as shown in Figures 1a, 1b. 6a and 6b. Thereby, the file page is located in place on the stage.

The microscope of Figures 3a - 3c is advantageous in a case where a file page 1, made of plastics or the like, is slightly curved so that the intersection of the file page 1 with the optical axis at right angles, which is necesary for accurate microscopic observation, is not maintained.

As shown in Figures 3a, 3b and 3c, in order to avoid the influence of undesirable curving of the file page, a planar glass plate 27 is provided on the diffusion plate 1 of the upper face of the box body. This planar glass plate 27 is at right angles with respect to the optical axis, and the file page 1 is movably placed on the glass plate. The arm 8 is provided with a pair of angular levers 28, 28 which are rotatable at fulcrums 29 The end portion of the lever 28, on the base side of the arm, is connected to the inside of the support arm 8 through a spring 30. A mouth-like press piece 31 is provided at the levers 28 under the upper optical system. The press piece 31 is finely rotatable to perform elastical pressing or releasing of the glass sheet 27 located under the press piece. Further, the lever 28 is also provided with a handle 32 near the press piece to facilitate manual pressing and releasing of the press piece 31.

The pressing mechanism with the pressing piece 31 functions to horizontally press the preparation 2 on the file page onto the glass plate 27 to make the face of the preparation orthogonal to the optical axis. The mechanism also functions to focus the microscope onto an object to be inspected in the preparation 2 by adjusting the pressing force posed onto the file page 1 through the pressing piece 31 by means of the handle 32. The pressing piece utilizes the property that the file page is elastically deformable due to the properties of the plastic file page itself.

Figure 3c shows a state in which the file page 1 is pressed against the glass plate 27 by means of the press piece 31.

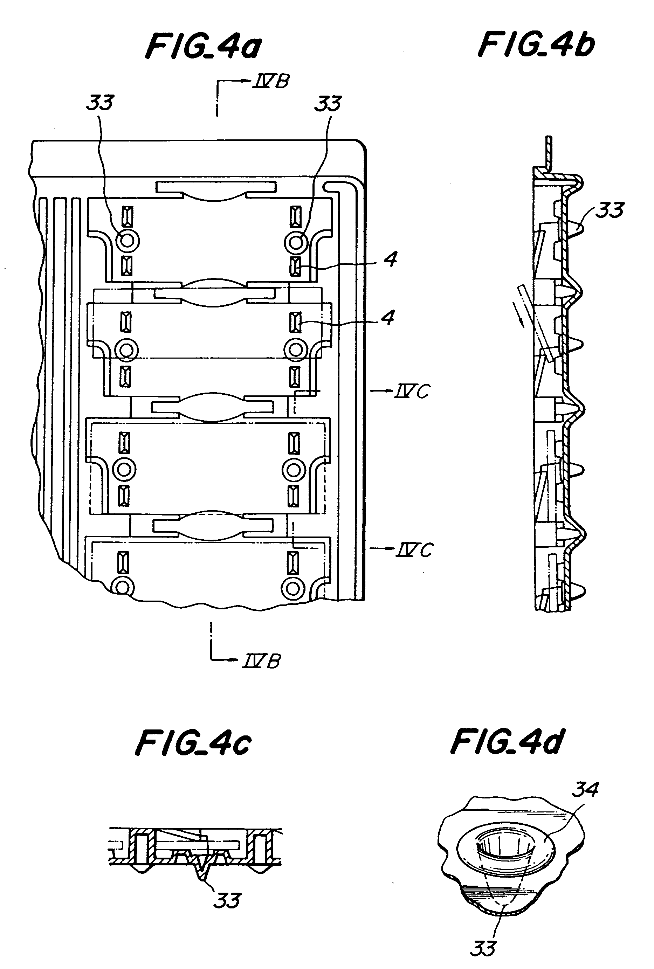

As shown in Figures 4a to 4b, the preparation file page 1 is provided with projections 33 which project from the rear face side of the file page in a place where they do not interrupt the microscopic observation through the section. The projections 33 facilitate the vertical movement of the file page in pressing. For instance, at least two projections 33 and positioned near the respective projections 4 or therebetween.

As seen from the sectional view of Figure 4c and the perspective view of Figure 4d, projection 33 is constituted by a conical portion, like a volcano crater and a swelled base portion 34, surrounding the conical portion 33 as in a somma (i.e. as a rim of a volcanic crater). The thus integrally provided projection 33 functions to make the pressing pressure applied to its tip end extremely uniformly absorbed by the base portion. Thereby, the deflection due to the pressing is not propagated to the whole file so that an intended section may be uniformly pressed down. Therefore, the preparation 2 positioned within the press piece is lowered by means of the projections 33 of the file page and the mouth-like press piece 31 while its posture is maintained at right angles with respect to the optical axis.

Further, when the objective lens is brought near to the preparation durng ordinary microscopic observation, there has been a possibilty that the glass preparation is broken by the tip end of the objective lens. When the preparation is inserted into the file page 1, even if the tip end of the objective lens 25 touches the preparation, the preparation is advantageously prevented from being broken due to the elasticity of the file page itself and the function of the above-mentiond projections.

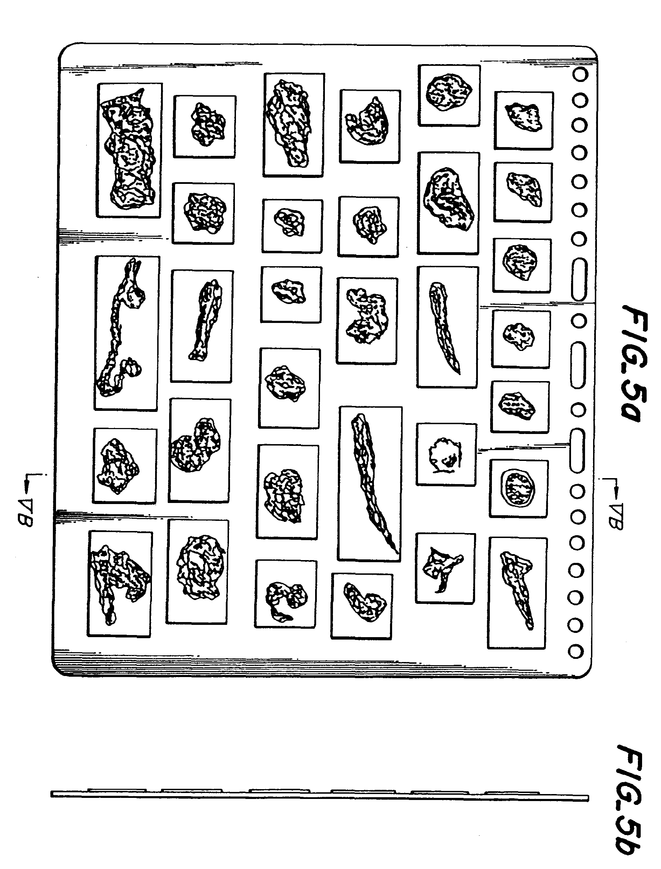

The microscope according to the present invention can be applied not only to the glass preparations as shown, but also to a recently polular large scale plastic plate 35 shown in Figures 5a and 5b onto which a number of objects to be inspected are directly attached.

According to the illustrated embodiments, although the stage is fixed and the optical system is vertically moved, the box may be provided with a moving mechanism for vertically moving the stage as in the case of the ordinary microscopes.

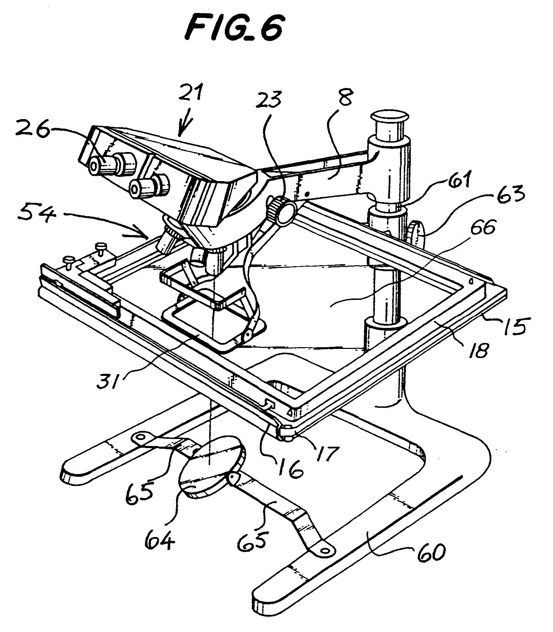

In the embodiment of Fig. 6, a table 62 as a base frame is vertically movably attached, by means of a rack and a pinion, to a pole 61 supported and erected on a leg portion 60. This table 62 supports a stage 18. The movement of the rack and the pinion is controlled by a rough movement handle 63. Above the table 62, an upper optical system 21 and a lower optical syste 54 are attached to the pole 61 through the support arm 8. A reflection mirror 64 is attached to the leg 60, and is rotatably supported by two brackets 65 attached to a bifurcated portion of the leg 60.

A light transmitting diffusion plate having substantially the same dimension as the file page to be placed on the table 62 is inserted into modle portion of the table 62. A hole not shown is provided in the light transmitting diffusion plate at a place around an intersection between the diffusion plate and the optical axis of the optical system. This hole has a size substantially equal to a image-holding area of a preparation 2. As explained in the foregoing embodiments, the microscope of Fig. 6 is provided with a sliding device which is constituted by fitting a pair of cross heads 15 to lateral rails not shown. A stage base plate 17 is slidably fitted to a pair of transverse rails 16 provided on the cross heads 15. A stage 18 is fixed on the stage base plate 17. As in the microscope of Figure 1, direct microscope observation is made with respect to the file page 1 into which preparations 2 are inserted.

In the modified embodiment, since the optical system can be moved vertically finely and the stage can be moved vertically roughly there is an advantage that the focusing of the microscope can be easily performed.

Further, as one example of the present invention, there have been shown the embodiment in which the base frame is designed in a body body, that is, a substantially sealed type microscope. In these embodiments, an illuminating optical system containing an electric-light bulb (not shown) or fluorescent light (not shown) is housed in the box body, but the base frame may be designed as an open type frame with only a reflector mirror as the illuminating optical system, as shown in Figure 6. In this case, natural light rays or an external light source is used as in the case of commonly known microscopes.

Further, as in the case of the embodiment shown in Figs. 3a through 3c, the microscope shown in Figure 6 is provided with a pushing mechanism having a pushing piece 31 for finely adjusting the focusing operation. This pushing mechanism functions to puch a preparation to a transparent glass plate 66 fitted and fixed into a stage 18 so that the surface of the preparation may be orthogonal to an optical axis of an optical system. In this embodiment, no light transmitting diffusion plate is inserted into the table 62.

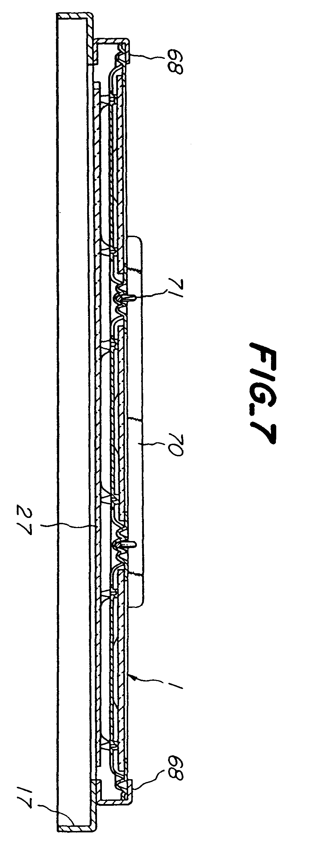

Another microscope as a still further modified embodiment is shown in a perspective view in Fig. 7. This microscope has a pushing and locating means which is provided on a stage base plate and functions in corporation with holes 67 of the preparation file page 1 shown in Figure 2a.

More specifically, the stage base plate is provided with a guide frame members 68 which engage with side edge portions of the file page 1 and bring the rear surface of the file page into an intimate contact with the planar glass plate 27. A rod member (not shown) is stretched between the opposite guide members 68 on the rear side as viewed from a file page-inserting direction. A projection 70 is provided on the stage base plate 17 on the front end as viewed from the file page-inserting direction, and the file page contacts it. Spring wires 71 are attached between the rod member and the projection 70, and are
adapted to be fitted into the respective channels 67 of the file page 1. The spring wire is stretched such that it may fall slightly toward the planar glass plate 27.

By so constructing, the microscope in this embodiment, when the file page is pushed in the inserting direction as shown in Figure 7, it is guided by the guide frame members 68 on the opposite sides and slided relative to the spring wires 71 fitted into the channels 67 of the file page . Ultimately, the file page is moved on the planar glass plate up to a position where it contacts with the projection 70 provied on the stage base plate 17, and it located and stored. The state in which the file page is located and held in this way is shown in Fig. 7. In such a stage, the file page is pushed to the planar glass plate 27 by a push force of the spring wires 71 fitted into the channels 67. Thus, even if the file page is curved, the file page can be always maintained in a horizontal posture relative to the planar glass plate 27. Accordingly, a plurality of the preparations inserted are arrayed in the file page are arranged in parallel with the planar glass plate 27 without any vettical level. The spring wires 71 fitted into the channels 67 of the file page 1 are located lower than at least a surface of a sample on the preparation to be examined in a place where the microscope is scanned relative to the preparation, and an amount by which the file page 1 projects upwardly from the preparation 2 is very small. Therefore, the file page 1 is movable to a desired location without interferring with the objective lens of the microscope.

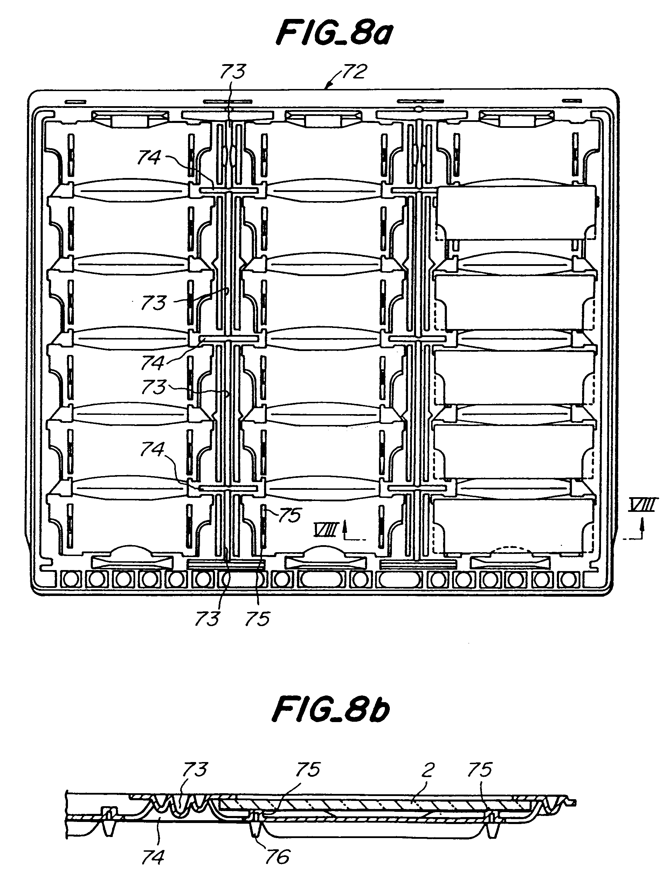

The file page 72 favorably used in the microscope shown in Figs. 7 will be explained with reference to Figs. 8a and 8b in a plan view and a sectional view, respectively. The file page 72 has a continuous channels 73 similar to those of the file page 1 shown in Figs. 2a and 2b, and it further comprises auxiliary ribs 74 projecting on the rear surface side of the file page 72, projections 75 and 75 projecting from the front surface of the file page 72 for supporting preparations, and support legs 76 projecting from the rear surface between the projections 75 for supporting the file page 72. The auxiliary ribs 74 function to prevent accidental bending of the file page 72 when the preparation is inserted into the file page 72. The support legs 76 function to uniformly contact with the planar glass plate 27 when the spring wires 71 of the microscope are fitted into the channels 73 of the file page 72, so that they support the file page 72, in its turn all the preparations 2, within the same plane and substantially in parallel with the planar glass plate 27.

In the above, explanation has been made of a case where the file page is applied to the microscope of the present invention and samples on the preparations 2 are systematically observed. When microscopic observation is to be made while light is downwardly irradiated upon an object to be observed and is reflected by the object, it is possible to observe surfaces of opaque materials such as IC tips, metallic tissue pieces, etc.

The microscope of the present invention has the advantages that a stage is provided to place the preparation file page thereon. Direct microscopic observation of the objects to be inspected in the preparations placed on the stage is done through the file page to make the observing operation easy. Since the preparations are observed while being inserted into the file page made of the elastic material, the preparaions are prevented from being broken even when brought into contact with the objective lens of the microscope.

## Claims

1. A microscope comprising a base frame (6), a stage (17) mounted on said base frame (6), an arm (8) extending from said base frame (6) above said stage (17), magnifying optical means (21) mounted on said arm (8) and defining an optical axis directed perpendicular to said stage (17) for viewing of a plurality of samples, said microscope being characterised in that a file page (1) is placed on said stage (17) and adapted for supporting a plurality of preparations (2) in a common plane, said preparations (2) being attached with said samples, a pair of levers (28) are each pivotably mounted on opposite sides of said arm (8), and a press piece (31) is located at one end of said pair of levers (28), said levers (28) being urged relative to said stage (17) to elastically press and release a sample onto and from said stage (17) so that the sample is observed through said magnifying optical means (21).

2. A microscope as claimed in claim 1, characterised in that the stage (17) is movable along the optical axis and in a direction orthogonal to the optical axis.

3. A microscope as claimed in claim 1, characterised in that an illuminating optical means (12, 13) is mounted on said base frame (6) for illuminating the samples located on said optical axis.

4. A microscope as claimed in claim 3, characterised in that said illuminating optical means comprises a reflecting mirror (12).

5. A microscope as claimed in claim 1, characterised in that said stage (17) is movably mounted on said base frame (6) for lateral movement relative to said base frame (6).

6. A microscope as claimed in claim 5, characterised in that first rails (14) are mounted on said base frame (6), cross heads (15) are fitted to said first rails (14), second rails (16) are mounted on said cross heads (15) in a direction perpendicular to said first rails (14), and said stage (17) is fitted onto said second rails (16) for horizontal movement of said stage.

7. A microscope as claimed in claim 1, characterised in that a handle (32) is mounted on said pair of levers (28) adjacent to said press piece (31) for facilitating the pressing and release of said sample.

8. A microscope as claimed in claim 1, characterised in that a light transmissive diffusion plate (10) is mounted on said base frame (6), said stage (17) being movably mounted on said base frame (6) above said diffusion plate (10), said file page (1) being located on said stage (17) by means of a pin (77) projecting from the stage (17) and wherein illuminating optical means (11, 12, 13) are provided for directing a source of light along said optical axis, said optical axis passing through said diffusion plate (10), said stage (17), the sample supported by said file page (1) and ultimately to said magnifying optical means (21) for magnified viewing of the sample.

9. A microscope as claimed in claim 8, characterised in that said illuminating optical means (11, 12, 13) illuminates said plate (10) and thereby illuminates any samples located on said stage (17).

10. A microscope as claimed in claim 8, characterised in that said stage (17) is movable to align each of a plurality of samples dispersed across said stage (17) with said optical axis.

11. A microscope as claimed in claim 6, characterised in that said file page (1) includes a channel (67) provided among preparation-storing areas of the file page (1) in a file page-inserting direction to receive members (71) of the stage (17), guide members (68) are provided on the stage (17) at the same locations as opposite side edges of the file page (1) mounted on the stage (17) and engage with at least two sides of the file page (1), and pushing means is provided to push the file page (1) onto the stage (17) while the stage is being fitted into the channel (67) of the file page (1).

## Patentansprüche

1. Mikroskop mit einem Grundgestell (6), mit einer auf dem Grundgestell (6) angebrachten Bühne (17), mit einem vom Grundgestell (6) ausgehenden und sich über die Bühne (17) erstreckenden Arm (8), mit einer am Arm (8) angebrachten vergrößernden optischen Einrichtung (20) zum Betrachten einer Anzahl von Proben, welche eine senkrecht zur Bühne (17) ausgerichtete Achse definiert,
dadurch gekennzeichnet, dass auf der Bühne (17) ein flacher Träger (1) zum Aufnehmen und Aufbewahren mehrerer Präparate (2) in einer gemeinsamen Ebene vorgesehen ist, wobei die Präparate (2) an den Proben angebracht sind,
dass ein Paar Hebel (28) vorgesehen sind, die schwenkbar an entgegengesetzten Seiten des Arms (8) angebracht sind, und dass ein Druckstück (30) an dem einen Ende des Hebelpaares (28) angebracht ist und die Hebel (28) relativ zur Bühne (17) gedrückt werden können, um eine Probe elastisch auf die Bühne (17) zu drücken oder von ihr zu lösen, so dass die Probe durch die vergrößernde optische Einrichtung (21) betrachtet werden kann.

2. Mikroskop nach Anspruch 1, dadurch gekennzeichnet, dass die Bühne (17) entlang und in einer Richtung quer zur optischen Achse beweglich ist.

3. Mikroskop nach Anspruch 1, dadurch gekennzeichnet, dass auf dem Grundgestell (6) eine optische Beleuchtungseinrichtung (12, 13) zum Beleuchten der auf der optischen Achse angeordneten Proben angebracht ist.

4. Mikroskop nach Anspruch 3, dadurch gekennzeichnet, dass die optische Beleuchtungseinrichtung einen reflektierenden Spiegel (12) enthält.

5. Mikroskop nach Anspruch 1, dadurch gekennzeichnet, dass die Bühne (17) auf dem Grundgestell (6) beweglich angebracht ist, und zwar zur seitlichen Verschiebung gegenüber dem Grundgestell (6).

6. Mikroskop nach Anspruch 5, dadurch gekennzeichnet, dass auf dem Grundgestell (6) erste Schienen (14) angebracht sind, dass an die ersten Schienen (14) jeweils ein Querhaupt (15) angepaßt ist, dass auf den Querhäuptern (15) in einer rechtwinklig zu den ersten Schienen (14) verlaufenden Richtung zweite Schienen (16) angebracht sind, und dass die Bühne (16) zum Zwecke ihrer waagerechten Bewegung passend auf den zweiten Schienen (16) angebracht ist.

7. Mikroskop nach Anspruch 1, dadurch gekennzeichnet, dass auf dem Hebelpaar (28) in der Nachbarschaft des Druckstücks (31) ein Griff (32) angebracht ist, um das Andrücken und Loslassen der Probe zu erleichtern.

8. Mikroskop nach Anspruch 1, dadurch gekennzeichnet, dass auf dem Grundgestell (6) eine lichtdurchlässige Streuscheibe (10) angebracht ist, dass die Bühne (17) oberhalb der Streuscheibe (10) beweglich auf dem Grundgestell (6) angebracht ist, dass der Träger (1) auf der Bühne (17) mittels eines von der Bühne (17) abstehenden Zapfens (77) in bestimmter Lage festgelegt wird und dass eine optische Beleuchtungseinrichtung (11, 12, 13) vorgesehen ist, welche Licht aus einer Lichtquelle entlang der optischen Achse führt, welche durch die Streuscheibe (10), durch die Bühne (17), durch die vom Träger (1) unterstützte Probe hindurchtritt und schließlich in die vergrößernde optische Einrichtung (21) für ein Betrachten der Probe unter Vergrößerung eintritt.

9. Mikroskop nach Anspruch 8, dadurch gekennzeichnet, dass die optische Beleuchtungseinrichtung (11, 12, 13) die Streuscheibe (10) und dadurch alle auf der Bühne (17) angeordneten Proben beleuchtet.

10. Mikroskop nach Anspruch 8, dadurch gekennzeichnet, dass die Bühne (17) in der Weise beweglich ist, dass jede der mehreren über die Bühne (17) verteilten Proben in die optische Achse verschoben werden kann.

11. Mikroskop nach Anspruch 6, dadurch gekennzeichnet, dass der Träger (1) zwischen den Bereichen, in denen die Präparate aufbewahrt werden, eine Rille (67) aufweist, welche sich in einer Richtung erstreckt, welche mit der Richtung des Einbringens der Präparate übereinstimmt und zur Aufnahme von Teile (71) der Bühne (17) dient, dass Führungsteile (68) auf der Bühne (17) an denselben Stellen vorgesehen sind, an denen sich einander abgewandte Seitenkanten des auf der Bühne (17) angebrachten Trägers (1) befinden und die Führungsteile (68) mit wenigstens zwei Seiten des Trägers (1) in Berührung stehen und Andrückmittel vorgesehen sind, um den Träger (1) auf die Bühne (17) zu drücken, während die Bühne in die Rille (67) des Trägers (1) eingepaßt ist.

## Revendications

1. Microscope comprenant une structure de base (6), un porte-objets (17) monté sur ladite structure (6), un bras (8) qui s'en dégage au-dessus dudit porte-objets (17), des moyens optiques (21) grossissant montés sur ledit bras (8), définissant un axe optique qui s'oriente perpendiculairement au porte-objets (17), de manière à permettre l'examen d'une pluralité d'échantillons, ledit microscope étant caractérisé en ce qu'une plaque mince (1) est placée sur le porte-objets (17), prévue pour supporter une pluralité de préparations (2) positionnées dans un unique plan, lesdites préparations (2) correspondant auxdits échantillons, une paire de leviers (28) montés pivotants étant fixée sur les côtés opposés dudit bras (8), et une pièce exerçant une pression (31) étant placée à l'une des extrémités de ladite paire de leviers (28), ceux-ci étant fixés sur le porte-objets (17) afin soit d'exercer une pression élastique, soit de libérer un échantillon dudit porte-objets (17) de telle manière que l'échantillon puisse être observé à travers lesdits moyens optiques (21) de grossissement.

2. Microscope selon la revendication 1, caractérisé en ce que le porte-objets (17) est mobile suivant l'axe optique et dans une direction orthogonale à celui-ci.

3. Microscope selon la revendication 1, caractérisé en ce que des moyens optiques lumineux (12, 13) sont montés sur la structure (6) de base pour illuminer les échantillons positionnés suivant ledit axe optique.

4. Microscope selon la revendication 3, caractérisé en ce que lesdits moyens optiques lumineux comportent un miroir réfléchissant (12).

5. Microscope selon la revendication 1, caractérisé en ce que le porte-objets (17) est monté sur la structure (6) de base de façon à être mobile suivant un mouvement latéral.

6. Microscope selon la revendication 5, caractérisé en ce que des premiers rails (14) sont montés sur ladite structure (6) de base, ces rails (14) étant surmontés de traverses (15), lesquelles servent de support à des seconds rails (16) perpendiculaires aux premiers rails (14), ledit porte-objets (17) étant monté mobile horizontalement sur lesdits seconds rails (16).

7. Microscope selon la revendication 1, caractérisé en ce qu'une poignée (32) équipe la paire de leviers (28) à proximité de la pièce de pression (31), afin de faciliter l'exercice de la pression ou le relâchement de l'échantillon.

8. Microscope selon la revendication 1, caractérisé en ce qu'on place sur la structure (6) de base une plaque (10) transmettant et diffusant la lumière, le porte-objets (17) étant monté mobile sur ladite structure (6) au-dessus de ladite plaque de diffusion (10), la plaque mince (1) étant positionnée sur le porte-objets (17) au moyen de goupilles saillant de ce dernier, les moyens optiques lumineux (11, 12, 13) étant dirigés de façon à orienter la source lumineuse le long de l'axe optique, qui traverse la plaque diffusante (10), le porte-objets (17), I'échantillon supporté par la plaque mince (1) et enfin le moyen optique grossissant (21) afin de grossir l'image de l'échantillon.

9. Microscope selon la revendication 8, caractérisé en ce que les moyens optiques lumineux (11, 12, 13) illuminent la plaque (10) et par conséquent tout échantillon positionné sur ledit porte-objets (17).

10. Microscope selon la revendication 8, caractérisé en ce que ledit porte-objets (17) est mobile de telle sorte qu'il puisse aligner sur l'axe optique chacun des échantillons placé sur lui.

11. Microscope selon la revendication 6, caractérisé en ce que ladite plaque mince (1) comprend un canal (67) placé entre les zones de positionnement des préparations, dans la direction d'insertion dans cette dernière, et destiné à recevoir des éléments (71) du porte-objets (17), des éléments de guidage (68) étant prévus sur le porte-objets (17) aux mêmes positions mais sur les côtés opposés de la plaque mince (1) montée sur ledit porte-objets, lesquels sont en prise avec au moins deux côtés de ladite plaque mince (1), et des moyens de pousser cette dernière contre le porte-objets (17) lorsque celui-ci est placé dans le canal (67).
